# EUROPEAN PATENT SPECIFICATION

(11) **EP 2 580 922 B1**
(45) Date of publication and mention of the grant of the patent: **20.03.2019**
(21) Application number: 11796319.9
(22) Date of filing: 14.06.2011
(51) Int. Cl.: H04R 3/04

(54) **IMPROVED PARAMETRIC SIGNAL PROCESSING AND EMITTER SYSTEMS AND RELATED METHODS**
VERBESSERTE VERARBEITUNG PARAMETRISCHER SIGNALE SOWIE EMITTERSYSTEME UND VERFAHREN DAFÜR
TRAITEMENT DE SIGNAUX PARAMÉTRIQUES AMÉLIORÉ ET SYSTÈMES D'ÉMETTEUR ET PROCÉDÉS LIÉS

(30) Priority: 22.02.2011 US 201161445195 P; 14.06.2010 US 354533 P
(43) Date of publication of application: 17.04.2013
(73) Proprietor: Turtle Beach Corporation, San Diego, CA 92131 (US)
(72) Inventor: Norris, Elwood, G., Poway, California 92064 (US)
(74) Representative: Walker, Ross Thomson
(86) International application number: PCT/US2011/040388
(87) International publication number: WO 2011/159724

(56) References cited:
- EP-A2- 0 973 152
- JP-A- 2005 353 989
- US-A- 4 673 888
- US-A- 5 361 381
- US-A1- 2001 007 591
- US-A1- 2005 220 311
- US-A1- 2006 215 841

## Description

### PRIORITY CLAIM

Priority is claimed of U.S. Provisional Patent Application Serial Number 61/354,533, filed June 14, 2010, and of U.S. Provisional Patent Application Serial Number 61/445,195, filed February 22, 2011.

### BACKGROUND OF THE INVENTION

### Field of the Invention

The present invention relates generally to the field of signal processing systems for use in audio reproduction.

### Related Art

Non-linear transduction, such as a parametric array in air, results from the introduction of sufficiently intense, audio modulated ultrasonic signals into an air column. Self demodulation, or down-conversion, occurs along the air column resulting in the production of an audible acoustic signal. This process occurs because of the known physical principle that when two sound waves with different frequencies are radiated simultaneously in the same medium, a modulated waveform including the sum and difference of the two frequencies is produced by the non-linear (parametric) interaction of the two sound waves. When the two original sound waves are ultrasonic waves and the difference between them is selected to be an audio frequency, an audible sound can be generated by the parametric interaction.

While the theory of non-linear transduction has been addressed in numerous publications, commercial attempts to capitalize on this intriguing phenomenon have largely failed. Most of the basic concepts integral to such technology, while relatively easy to implement and demonstrate in laboratory conditions, do not lend themselves to applications where relatively high volume outputs are necessary. As the technologies characteristic of the prior art have been applied to commercial or industrial applications requiring high volume levels, distortion of the parametrically produced sound output has resulted in inadequate systems.

Whether the emitter is a piezoelectric emitter, or PVDF film or electrostatic emitter, in order to achieve volume levels of useful magnitude, conventional systems often required that the emitter be driven at intense levels. These intense levels have often been greater than the physical limitations of the emitter device, resulting in high levels of distortion or high rates of emitter failure, or both, without achieving the magnitude required for many commercial applications.

Efforts to address these problems include such techniques as square rooting the audio signal, utilization of Single Side Band ("SSB") amplitude modulation at low volume levels with a transition to Double Side Band ("DSB") amplitude modulation at higher volumes, recursive error correction techniques, etc. While each of these techniques has proven to have some merit, they have not separately, or in combination, allowed for the creation of a parametric emitter system with high quality, low distortion and high output volume. The present inventor has found, in fact, that under certain conditions some of the techniques described above actually cause more measured distortion than does a refined system of like components without the presence of these prior art techniques.

US-A-2001/0007591 discloses a conventional parametric audio system.

EP-A-0973152 discloses another conventional parametric audio system.

JP 2005 353989 A discloses a complex inductor in the form of a pot core transformer for a loudspeaker.

### SUMMARY OF THE INVENTION

According to one aspect of the present invention, there is provided a parametric signal emitting system as defined in claim 1 hereinafter.

Additional features and advantages of the invention will be apparent from the detailed description which follows, taken in conjunction with the accompanying drawings, which together illustrate, by way of example, features of the invention.

### BRIEF DESCRIPTION OF THE DRAWINGS

The following drawings illustrate exemplary embodiments for carrying out the invention. Like reference numerals refer to like parts in different views or embodiments of the present invention in the drawings.
FIG. 1 is a block diagram of an exemplary signal processing system in accordance with one embodiment of the invention;
FIG. 2 is a block diagram of an exemplary amplifier and emitter arrangement in accordance with an embodiment of the invention;
FIG. 3A is a frequency response curve of a typical double sideband modulated signal generated by a conventional signal processing system, shown with an improved frequency response curve (having increased amplitude) in accordance with the present invention overlaid thereon;
FIG. 3B is a frequency response curve of a typical single sideband modulated signal generated by a conventional signal processing system, shown with an improved frequency response curve (having increased amplitude) in accordance with the present invention overlaid thereon;
FIG. 4 is flow chart illustrating an exemplary method of processing an audio signal in accordance with one embodiment of the invention;
FIG. 5 is a schematic perspective view of an exemplary emitter in accordance with an embodiment of the invention;
FIG. 6 is a schematic end view of one embodiment of the emitter of FIG. 5;
FIG. 7 is a schematic end view of another configuration of the emitter of FIG. 5;
FIG. 8 is a partial, schematic end view of another configuration of the emitter of FIG. 5;
FIG. 9 is a partial, schematic end view of another configuration of the emitter of FIG. 5;
FIG. 10 is a frequency response curve of a typical signal generated by a conventional signal processing system, shown with an improved frequency response curve (having increased amplitude) of the present invention overlaid thereon;
FIG. 11 is a graphical representation of one manner of strategically selecting a frequency of standing waves created by purposeful spacing of the protective screen from the emitter face in accordance with an embodiment of the invention;
FIG. 12 is a block diagram of an exemplary amplifier and emitter arrangement in accordance with an embodiment of the invention;
FIG. 13 is a block diagram of an exemplary amplifier and emitter arrangement in accordance with an embodiment of the invention;
FIG. 14 is a block diagram of an exemplary amplifier and emitter arrangement in accordance with an embodiment of the invention;
FIG. 15 is a sectional view of a pot core used in an inductor/transformer assembly in accordance with an embodiment of the invention;
FIG. 16 is a frequency response curve of a signal generated by a conventional signal processing system, shown with an improved frequency response curve (having increased amplitude) of the present invention overlaid thereon; and
FIG. 17 includes a flowchart illustrating a method of optimizing a parametric emitter system having a pot core transformer coupled between an amplifier and an emitter in accordance with one embodiment of the invention.

### DETAILED DESCRIPTION

Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

### Definitions

As used herein, the singular forms "a" and "the" can include plural referents unless the context clearly dictates otherwise. Thus, for example, reference to "an emitter" can include one or more of such emitters.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc., as well as 1, 2, 3, 4, and 5, individually.

This same principle applies to ranges reciting only one numerical value as a minimum or a maximum. Furthermore, such an interpretation should apply regardless of the breadth of the range or the characteristics being described.

### Invention

The present invention provides a parametric signal emitting system according to claim 1. Any subject matter described herein that does not fall within the scope of claim 1 is provided for information purposes only. The parametric signal emitting system of the present invention has proven to be much more efficient than the systems of the prior art (creating greater output with far lower power consumption), while also providing sound quality which could not be achieved using prior art parametric emitter systems.

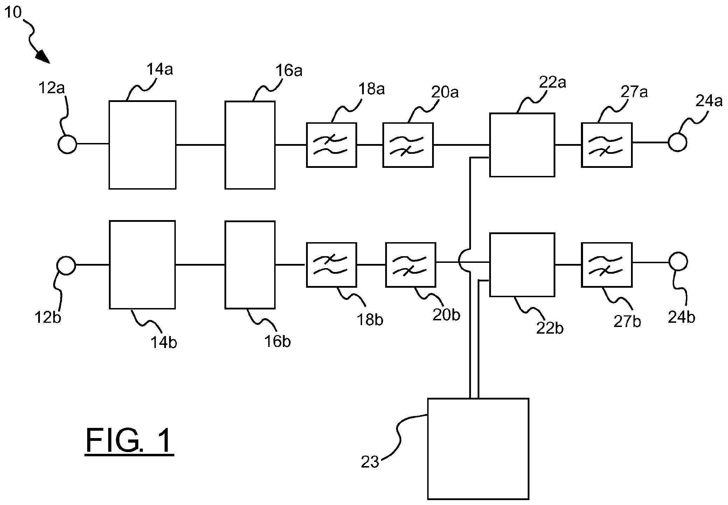

One exemplary, non-limiting signal processing system 10 in accordance with the present invention is illustrated schematically in FIG. 1. In this embodiment, various processing circuits or components are illustrated in the step-wise order (relative to the processing path of the signal) in which they are arranged according to one implementation of the invention. While one or more embodiments of the invention are limited to the specific order discussed or shown herein, it is to be understood that the components of the processing circuit can vary, as can the order in which the input signal is processed by each circuit or component. Also, depending upon the embodiment, the processing system 10 can include more or fewer components or circuits than those shown.

Also, the example shown in FIG. 1 is optimized for use in processing multiple input and output channels (e.g., a "stereo" signal), with various components or circuits including substantially matching components for each channel of the signal. It is to be understood that the system can be equally effectively implemented on a single signal channel (e.g., a "mono" signal), in which case a single channel of components or circuits may be used in place of the multiple channels shown.

Referring now to the exemplary embodiment shown in FIG. 1, a multiple channel signal processing system 10 can include audio inputs that can correspond to left 12a and right 12b channels of an audio input signal. Compressor circuits 14a, 14b compress the dynamic range of the incoming signal, effectively raising the amplitude of certain portions of the incoming signals and lowering the amplitude of certain other portions of the incoming signals, resulting in a narrower range of audio amplitudes. In one aspect, the compressors lessen the peak-to-peak amplitude of the input signals by a ratio of not less than about 2:1. Adjusting the input signals to a narrower range of amplitude can advantageously eliminate overmodulation distortion which is characteristic of the limited dynamic range of this class of modulation systems.

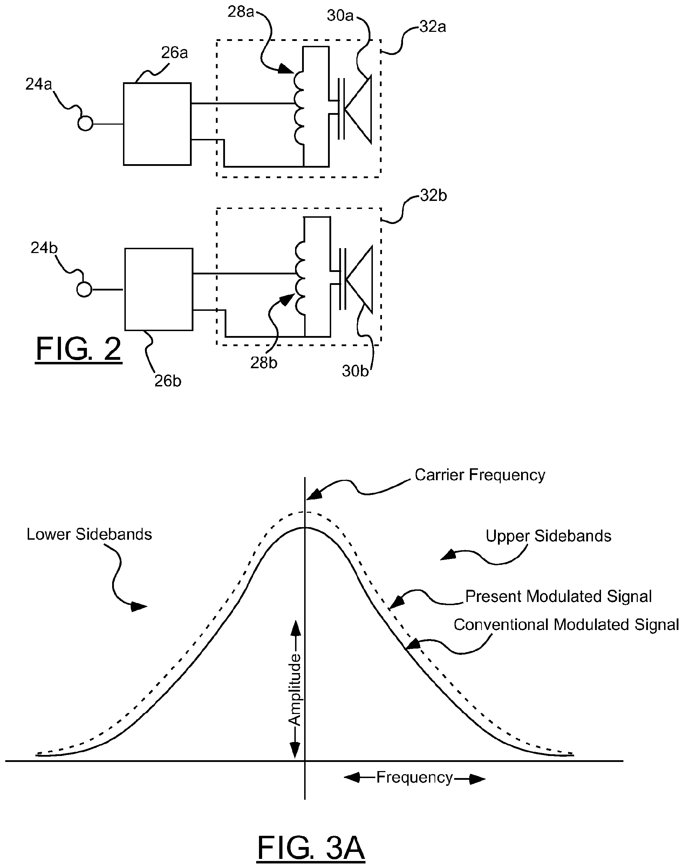

After the audio signals are compressed, equalizing networks 16a, 16b provide equalization of the signal. The equalization networks advantageously boost lower frequencies to increase the benefit provided naturally by the emitter/inductor combination of the parametric emitter assembly (32a, 32b, for example, in FIG. 2).

Low pass filter circuits 18a, 18b can be utilized to provide a hard cutoff of high portions of the signal, with high pass filter circuits 20a, 20b providing a hard cutoff of low portions of the audio signals. In one exemplarily embodiment of the present invention, low pass filters 18a, 18b are used to cut signals higher than 15 kHz, and high pass filters 20a, 20b are used to cut signals lower than 200 Hz (these cutoff points are exemplary and based on a system utilizing an emitter having on the order of fifty square inches of emitter face).

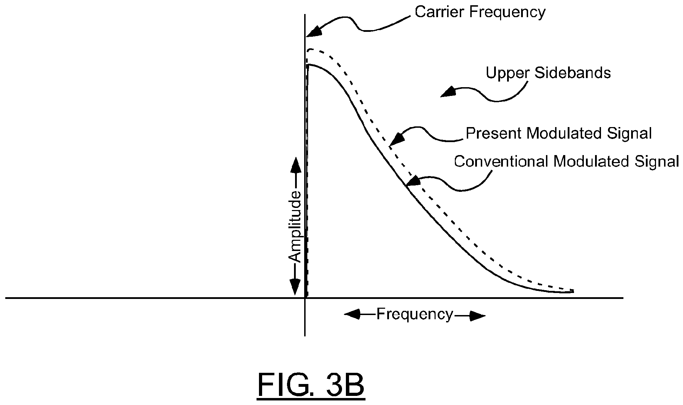

The high pass filters 20a, 20b can advantageously cut low frequencies that, after modulation, result in very little deviation of carrier frequency (e.g., those portions of the modulated signal of FIGs. 3A and 3B that arc closest to the carrier frequency). These low frequencies are very difficult for the system to reproduce efficiently (e.g., much energy can be wasted trying to reproduce these frequencies), and attempting to reproduce them can greatly stress the emitter film (as they would otherwise generate the most intense movement of the emitter film).

The low pass filters 18a, a8b can advantageously cut higher frequencies that, after modulation, could result in the creation of an audible beat signal with the carrier. By way of example, if a low pass filter cuts frequencies above 15 kHz, with a carrier frequency of around 44 kHz, the difference signal will not be lower than around 29 kHz, which is still outside of the audible range for humans. However, if frequencies as high as 25 kHz were allowed to pass the filter circuit, the difference signal generated could be in the range of 19 kHz, which is well within the range of human hearing.

In the exemplary embodiment shown, after passing through the low pass and high pass filters, the audio signals are modulated by modulators 22a and 22b, where they are combined with a carrier signal generated by oscillator 23. While not so required, in one aspect of the invention, a single oscillator (which in one embodiment is driven at a selected frequency of between about 40 kHz to 50 kHz, which range corresponds to readily available crystals that can be used in the oscillator) is used to drive both modulators 22a, 22b. By utilizing a single oscillator for multiple modulators, an identical carrier frequency is provided to multiple channels being output at 24a, 24b from the modulators. This aspect of the invention can negate the generation of any audible beat frequencies that might otherwise appear between the channels while at the same time reducing overall component count.

While not so required, in one aspect of the invention, high-pass filters 27a, 27b can be included that serve to filter out signals below about 25 kHz. In this manner, the system can ensure that no audible frequencies enter the amplifier via outputs 24a, 24b. As such, only the modulated carrier wave is fed to the amplifier(s), with no accompanying audio artifacts.

Thus, the signal processing system 10 receives audio inputs at 12a, 12b and processes these signals prior to feeding them to modulators 22a, 22b. An oscillating signal is provided at 23, with the resultant outputs at 24a, 24b then including both a carrier wave (typically ultrasonic) and the audio signals that are being reproduced, typically modulated onto the carrier wave. The resulting output(s), once emitted in a non-linear medium such as air, produce highly directional parametric sound within the nonlinear medium.

For more background on the basic technology behind the creation of an audible wave via the emission of two ultrasonic waves, the reader is directed to numerous patents previously issued to the present inventor, including U.S. Patent No. 5,889,870 and 6,229,899. Due to numerous subsequent developments made by the present inventor, these earlier works are to be construed as subordinate to the present disclosure in the case any discrepancies arise therebetween.

Turning now to FIG. 2, the outputs 24a, 24b from the signal processing system 10 can be electronically coupled to amplifiers 26a, 26b. After amplification, the signal can be sent to emitter assemblies 30a, 30b, which can be any of a variety of known emitters capable of emitting ultrasonic signals. In one aspect of the invention, inductors 28a, 28b can be located "on-board" the emitters 30a, 30b (e.g., within the same casing, or attached to the casing, or located adjacent or near the same casing). By locating the inductors on-board the emitters, the signal can be carried from the processing system to the emitters (or from the amplifier to the emitters) across substantial distances using ordinary speaker wire without subjecting the lines that carry the signal to high voltages.

Conventional units in which a resonant matching inductor is placed on the amplifier board can generate very high voltages between the inductor in the lines or cables carrying the modulated signal to the emitter. These voltages can be sufficiently high so as to cause the signal lines to radiate through the air on the AM or FM radio frequency bands, thereby causing interference. This radiation can occur either from harmonics of the carrier or from the switching frequency used in a class D power amplifier, thus creating issues with obtaining necessary FCC and UL approvals.

By coupling the inductor or inductors of the present invention adjacent the emitter, and distal from the power amplifying and signal processing components, virtually any length of cabling can separate the signal processing system and the emitters. In this manner, the 8-10 times multiplication of the peak to peak ("p/p") amplifier output voltage generated by the resonant circuitry of the inductor (28a, 28b) and emitter (30a, 30b) does not pass through the cabling (as would be seen in conventional units). This solution also avoids the requirement that the signal processing components, power amplifier and the emitter be packaged in the same unit, allowing greater flexibility in manufacture and cosmetic design. While the location of the inductor or inductors from the emitter can vary, in one aspect, the inductor or inductors are located within at least about three inches of the emitter. In one embodiment, the inductor or inductors are located at least about two feet from the power amplifying and signal processing components of the system.

A variety of suitable types of inductors 28a, 28b can be utilized. However, in one aspect of the invention, a fully shielded inductor, such as a pot core inductor, is utilized. This can minimize or eliminate hot spots being generated when the inductor is placed on or near the emitters. Because the pot core material itself is an effective magnetic shield, yet is not electrically conductive, such an inductor can be placed in close proximity to the emitter without fear of any kind of mutual coupling. The ability of locating the inductor close to the emitter contributes to providing emitters that are substantially thinner, lighter and more aesthetically pleasing.

As will be appreciated by one of ordinary skill in the art, the signal processing system 10 is comprised of relatively inexpensive components that operate with extremely low power consumption. Through the use of modern Integrated Circuits all functions can be accomplished in a single programmable chip (such as a device currently sold under the trade name Analog Devices' ADAU1701). The only significant power consumption of the present system is by amplifiers 26a, 26b (FIG. 2), which can be minimized with many modern, off-the-shelf class D amplifiers. The signal processing system also allows for the use of power amplifiers from existing systems, providing freedom to incorporate the processing system into a variety of existing technology. For example, even though the amplifiers 26a, 26b are readily available commercially (and relatively inexpensive), a user of the system may wish to use amplifiers from an existing machine (a vending machine, for example). In this case, the signal processing system from FIG. 1 can be easily incorporated into the existing machine to provide parametric audio capability to existing amplifiers of the machine.

The signal processing system 10 provides a number of advantages over prior art systems. For example, when used with a conventional electrically sensitive, mechanically responsive ("ESMR") film emitter, conventional systems often provide voltages to the emitter film that peak as high as 800 volts. Many such film emitters begin breaking down at 800 volts (p/p), or less. By combining audio amplitude compression and audio bandpass limiting, the current system has been found to peak at no more than about 300 volts p/p, much lower than the maximum operating voltages of most film emitters.

Additionally, signal take-off connections (not shown in the figures) can be readily incorporated into the present signal processing system (e.g., before audio compressors 14a, 14b) to drive conventional low-frequency components such as sub-woofer speakers. Typically, the need to provide directionality to such devices is not important, as the human ear cannot detect directionality of low frequency tones. Thus, the present system could satisfy a range of audio output frequencies with high quality, parametric performance. In addition, the present system can incorporate volume controls (not shown) that can adjust for different line inputs from different audio sources, such as iPods™, radios, CD players, microphones, etc.

When desired, the signal processing system 10 can include an automatic mute feature that reduces or eliminates power to the amplifiers in the event no audio signal is present. This feature can be incorporated into one or more of the components or circuits illustrated in FIGs. 1 and 2. By reducing or eliminating power provided to the amplifiers in the absence of an audio signal, unnecessary power usage and heat generation can be minimized.

The signal processing system can advantageously produce output that can be connected to and used by a variety of emitter types. In one example, an ESMR film emitter has been found to be particularly effective. Some exemplary, conventional ESMR film emitters are discussed in U.S. Patent Publication No. 20050100181, which is hereby incorporated herein by reference to the extent it is consistent with the teachings herein (however, the earlier work is to be construed as subordinate to the present disclosure in the case that any discrepancies exist therebetween).

FIG. 3A illustrates some of the advantages provided by the present invention, in which a double sideband amplitude modulation scheme is used. In FIG 3A, the frequency characteristic of a conventional signal generator is shown, which can, for example, be 40 kHz resonant frequency. During operation, upper and lower sidebands are generated as a result of double sideband amplitude modulation of the carrier by an audio input signal. Shown overlaid thereon is the frequency characteristic of a signal generated by the present invention. As is shown, the present system generates a signal having an overall amplitude that is substantially increased relative to a conventional signal output, with no corresponding increase in the power input required.

FIG. 3B illustrates some of the advantages provided by the present invention, in which a single sideband amplitude modulation scheme is used. In FIG 3B, the frequency characteristic of a conventional signal generator is shown, which can, for example, be 25 kHz resonant frequency. During operation, an upper sideband is generated as a result of single sideband amplitude modulation of the carrier by an audio input signal. Shown overlaid thereon is the frequency characteristic of a signal generated by the present invention. As is shown, the present system generates a signal having an overall amplitude that is substantially increased relative to a conventional signal output, with no corresponding increase in the power input required.

The system described above can provide numerous advantages over conventional systems. Due to the increase in sound output and quality, and the ability to precisely process stereo inputs, two emitters can be used together to produce true binaural sound quality without requiring the use of headphones (as all conventional binaural systems do).

The power requirements for the present system are drastically reduced from those of prior art systems. The present signal processing system can be driven by a simple power supply and consumes as little as 9 watts per channel at peak usage. Conventional systems often consume 130 watts at peak usage, and can range from 80-130 watts during continual use. Despite this reduced power requirement, the present system has been measured to output several times the volume of conventional systems.

The distortion levels produced by the present system are considerably lower than conventional systems. Some such systems have been measured to produce 50%-80% distortion. The present system measures less than 30% distortion (when used with single side band, or SSB, modulation, the distortion can be as low as 5-10%).

Despite all of the advantages provided by the system, it can be manufactured from relatively simple components at a fraction of the cost of conventional systems. For example, modern Integrated Circuits can be utilized such that all functions are accomplished in a single programmable chip. In one embodiment, an audio processor currently sold under the trade name Analog Devices ADAU1701 is utilized to implement the functionality illustrated in FIG. 1. Thus, a complete system can require only three or four readily available components: the audio processor described above; a machine-readable medium (such as an EPROM chip) to store programming and support the audio processor, and a small crystal to provide the modulation signal. In one embodiment, Class D amplifiers can be utilized to amplify the signal produced.

Some or all of the components can be digital components, which exhibit efficiencies on the order of 90% (as compared to 20-35% obtainable with analog components), and are much more reliable than many analog components. Digital components also reduce power supply needs and require much smaller heat sinks.

It will be appreciated by those of ordinary skill in the art that any configuration of the system may be used for various purposes according to the particular implementation. The control logic or software implementing the present invention can be stored on any machine-readable medium locally or remotely accessible by/to the audio processor. A machine-readable medium can include any mechanism for storing or transmitting information in a form readable by a machine. For example, a machine readable medium can include read-only memory (ROM), random access memory (RAM), magnetic disk storage media, optical storage media, flash memory devices, electrical, optical, acoustical or other forms of propagated signals (e.g. carrier waves, infrared signals, digital signals, etc.).

In one aspect of the invention, signal processing functions can be carried out primarily using digital signal processing ("DSP") techniques and components. In cases where the memory storage capacity of DSP components is insufficient, one or more audio codecs can be used for A/D conversion.

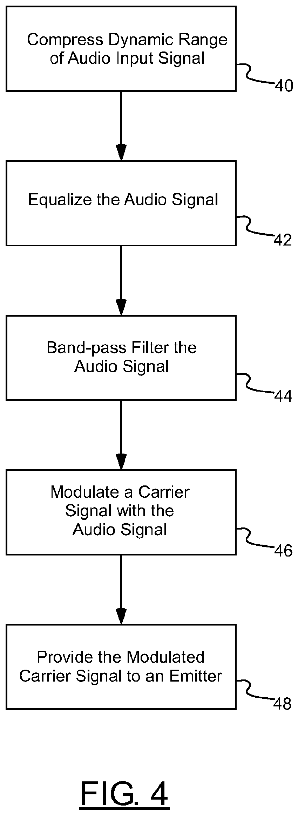

Turning now to FIG. 4, an exemplary method of processing an audio signal in accordance with the present invention is shown. In this example, the dynamic range of an input audio signal can be compressed at 40 (in some embodiments, compression is carried out prior to modulation of the audio signal). At 42, the audio signal can be equalized. At 44, a band-pass module can filter the audio signal. At 46, a carrier wave can be modulated with the audio signal. At 48, the modulated carrier wave can be provided to a suitable emitter.

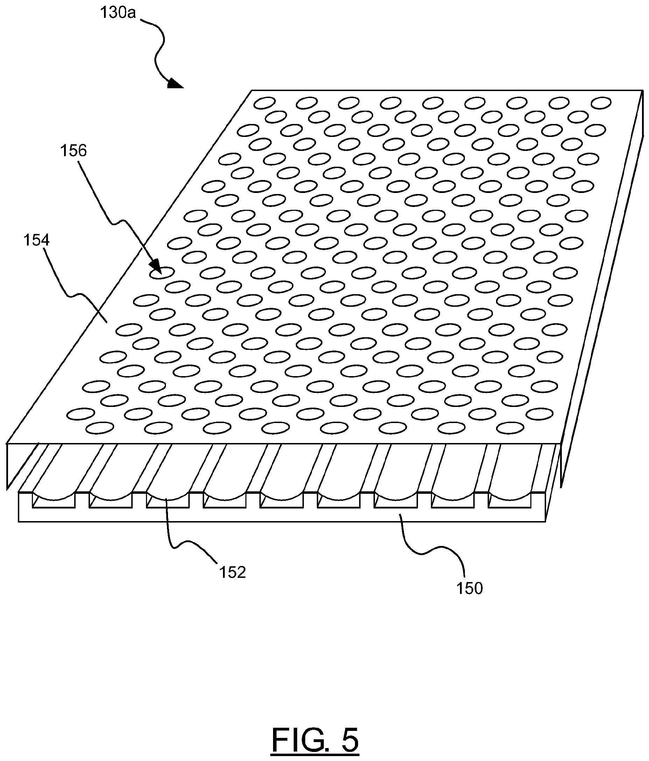

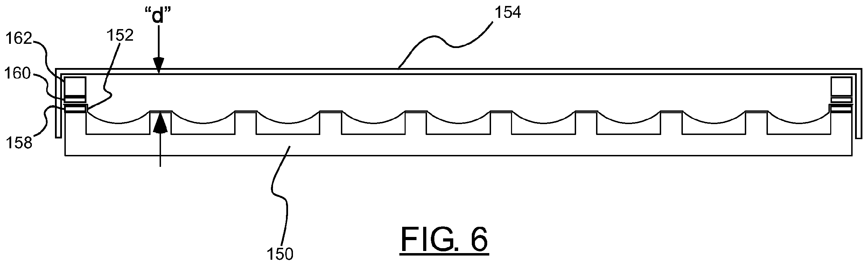

Turning now to FIG. 5, one specific exemplary emitter configuration provided by the present system is illustrated generally at 30a (and in more detail in FIG. 6). In this aspect of the invention, a support member 150 can include a sound emittive material (such as an ESMR film) 152 attached thereto. When provided with a signal from the signal processing system 10 (not shown in these figures), the sound emittive material propagates a parametric sound wave generated as discussed above, resulting in the formation of a highly directional sound column (not shown in detail in the drawings). A protective screen or cover 154 can be positioned over the sound emittive material to protect the material from inadvertent contact by users as well as dramatically increase output due to strategic spacing of the protective screen from the sound emittive material. The protective screen or cover 154 can include a series of apertures 156 that allow the parametric wave to pass through the protective screen while increasing the output level emitted.

As will be readily appreciated by one of ordinary skill in the art, while protective screens or covers can be desirable (or even required) to protect both users of the product and the emittive film itself, the presence of a protective cover or screen has, in the past, had a negative impact on the output of the emitter unit. Such as result has been expected, as the protective screen interferes, in one way or another, with the operation of the emitter as it was designed. However, the present inventor has developed a protective screen system that does not negatively impact output of the emitter unit, and, due to the reinforcing action of standing waves, actually increases the output of the emitter without introducing distortion or other negative sound qualities.

As shown by example in FIG. 4, in one aspect of the invention, the protective screen or cover 154 can be purposefully spaced from the sound emittive film 152 by a distance "d" that is a function of the resonant frequency of the emitter. By carefully controlling this distance "d," the present inventor has developed an emitter system (including a cover or protective screen) that has measured output that is substantially higher than that emitted by the system without the use of a cover screen.

While the spacing "d" of the screen relative to the emitter can vary, in one aspect the spacing is equal to one wavelength of the resonant frequency. In the case where the resonant frequency is designed at 40 kHz, for example, this spacing is about 0.337 inches (measured from the inside of the screen to the face of the emittive film). An emitter having a protective cover or screen thusly positioned has measurably increased output. It is believed that this spacing enhances the output of the emitter due to the creation of standing waves between the film and the screen.

In addition to increasing the amplitude of the output of the emitter, controlling the spacing of the protective screen from the emitter film can also greatly reduce distortion in the output signal. In one aspect of the invention, the spacing of the protective screen can be varied to adjust an acoustic impedance of the airspace between the protective screen and the emitter face. More specifically, it is believed that the acoustic impedance of the airspace immediately adjacent the emitter face is altered by controlled spacing of the protective screen to more closely match the acoustic impedance of the emittive film. It is believed that this result is achieved due to loading the airspace with acoustic energy that is deflected back to the emitter face by the portions of the screen that block sound rather than allow it to pass through the screen (e.g., the solid portions of the screen that are not apertures).

In this manner, the output of the emittive film is stabilized, leading to a considerable decrease in distortion of the sound produced by the emitter. In one aspect of the invention, this effect is also functionally related to spacing the screen in increments of the wavelength of the resonant frequency of the emitter. For example, this effect seems most pronounced when the spacing is one wavelength of the resonant frequency, and/or fractions thereof (e.g., 1/4 wavelength, 1/2 wavelength, 3/4 wavelength, etc.).

It has also been found that varying the diameter of the apertures 156 can also positively affect the output of the emittive film. In one example, forming the apertures with a diameter of about one-half of a wavelength of the resonant frequency is optimal. Apertures having diameters of other fractional measures of the wavelength of the resonant frequency can also be utilized. Also, while the apertures shown in FIG. 5 are generally circular, they can be formed in more slot-like (e.g., oval) configurations is so desired. Also, the apertures can vary from the example shown in relative spacing one from another: they can be spaced further or closer to one another than is illustrated in the example figure.

The spacing of the protective screen or cover 154 can be accomplished in a number of manners. In the exemplary embodiment shown in FIG. 6, spacers 162 can be installed on each edge of the emitter face to maintain the protective screen at the specified distance "d" from the emittive film face. The spacers 162 can include conductors 160 formed on a lower face thereof that can provide electrical connection to one face of the emittive material. Another conductive strip 158 can be installed beneath the emittive material to provide electrical connection for that side of the emittive material. Thus, a solid electrical connection can be made with the emittive material across substantially an entire length of the material.

The spacers 162 can be formed from a variety of materials. In the event the conductive strips are in contact with the spacer, however, the spacer is best formed from a non-conductive material such as wood, plastic, etc. (or coated or insulated with a non-conductive material).

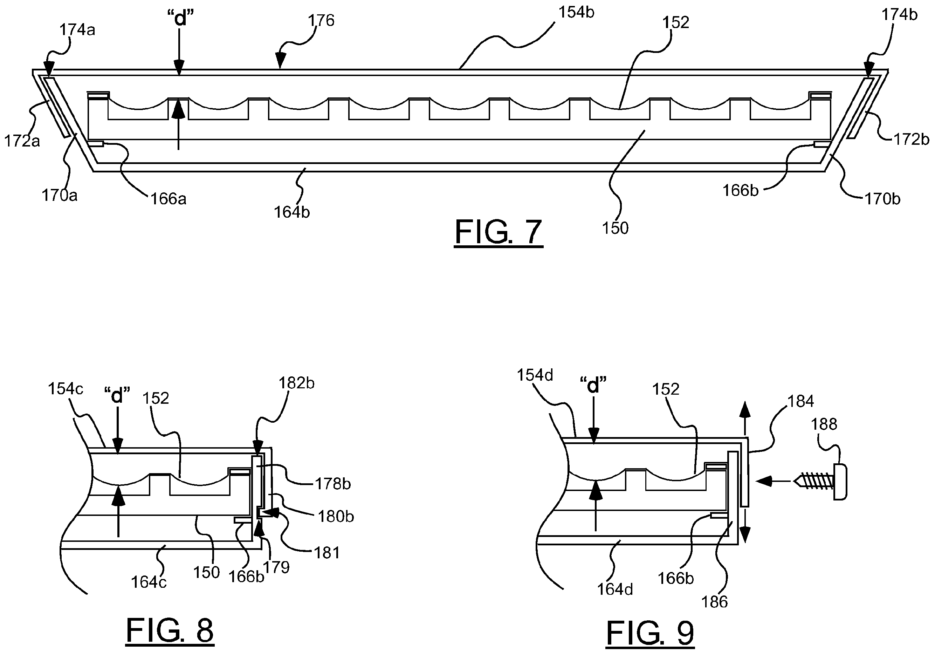

FIG. 7 illustrates another manner in which the protective screen or cover 154b can be maintained or retained at the predetermined position "d." In this embodiment, the support member 150 is attached within a housing 164b. Attachment of the support member is shown by example utilizing shoulders 166a, 166b, but any number of attachment schemes could be utilized to couple the support member to or within the housing. In the embodiment shown, the housing includes a pair of upwardly and outwardly angled sidewalls 170a, 170b. The protective cover or screen 154b can include a pair of downwardly and inwardly angled sidewalls 172a, 172b. The angles of the respective sidewalls can correspond to one another, such that the protective screen or cover is securely retained against edges 174a, 174b of the housing 164b when the sidewalls are engaged with one another. In this manner, once the protective cover or screen is installed over the housing, the distance "d" is maintained.

Installation of the protective cover or screen 154b over (or to) the housing 164b can be accomplished in a number of manners. In one aspect, the cover or screen can be slid longitudinally relative to the housing to engage the housing while the sidewalls 170a, 172a and 170b, 172b, respectively, engage one another. Locking means (not shown), such as indentations or "snap-fit" locations, can be utilized to fix the cover or screen in a desired position over the housing once the cover or screen has been slid into the desired position. In another aspect, the sidewalls of the cover or screen can be "snap fit" over the sidewalls of the housing to secure the cover or screen in place. As will be appreciated by one of ordinary skill in the art having possession of this disclosure, the exact angle from which the sidewalls vary from a frontal face 176 of the protective screen or cover is not critical. However, the angle should vary sufficiently from ninety degrees such that the protective cover or screen is not easily dislodged from the housing.

Turning now to FIG. 8, another exemplary configuration of housing 164c and protective screen 154c is illustrated (only one edge of the configuration is shown, the opposing edge can be a mirror image of the edge shown). In this aspect of the invention, sidewall 178b of the housing includes an indentation 179. Sidewall 180b of the protective screen or cover includes a protrusion 181. To install the protective screen or cover over the housing, the protrusion 181 can be "snap fit" into the indentation 179 to secure and retain the cover or screen at the predetermined distance "d." The indentation and protrusion can extend longitudinally substantially fully along the edge of the housing, or only partially along the edge. In some aspects of the invention, multiple indentations can be distributed longitudinally along sidewall 178b and multiple protrusions can be distributed longitudinally along sidewall 180b.

In addition, while the embodiment shown includes at least one indentation 179 in sidewall 178b of the housing 164c (with a corresponding protrusion 181 in the sidewall 180b of the protective screen or cover 154c), it is to be understood that the positioning of the indentation and protrusion can be interchanged. That is, the sidewall 178b could be provided with a protrusion and sidewall 180b could be provided with an indentation.

In the embodiment illustrated in FIG. 9, protective cover 154d can slide freely over housing 164d, with sidewall 184 sliding relative to sidewall 186. Once the desired separation distance "d" is created, fastener 188 can be utilized to fix the protective cover or screen relative to one another.

While the various fastening schemes illustrated in FIGs. 7, 8 and 9 are shown independently of one another, it is to be understood that more than one type of fastening scheme can be utilized to secure and retain the protective cover to the housing. For example, the angled sidewalls of FIG. 7 could be utilized along with the protrusion/indention scheme of FIG. 8 and, if desired, a mechanical fastener could be utilized to secure the assembly to prevent inadvertent movement of the protective screen or cover relative to the housing.

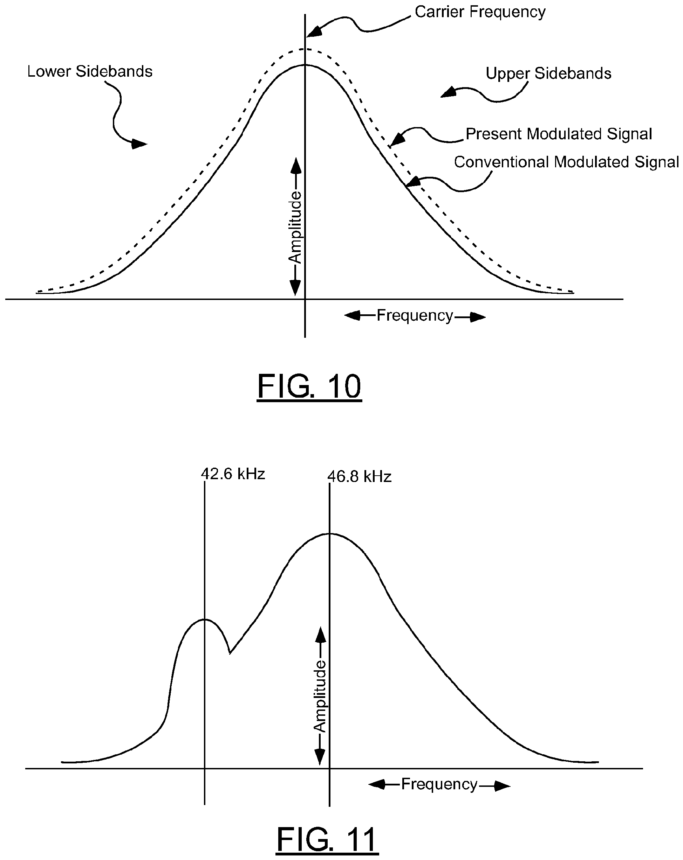

FIGs. 10 and 11 illustrate advantages provided by the present invention. In FIG 10, the frequency characteristic of a conventional signal generator is shown, which can, for example, be 40 kHz resonant frequency. During operation, upper and lower sidebands are generated as a result of double sideband amplitude modulation of the carrier by an audio input signal. Shown overlaid thereon is the frequency characteristic of a signal generated by the present invention. By the strategic spacing of the screen 154 (as illustrated in FIGs. 6, 7, 8 and 9) in front of the emitter, the overall amplitude of the system is substantially increased relative to a conventional signal output, with no corresponding increase in the power input required.

FIG. 11 illustrates graphically one manner of selecting the spacing distance of the protective screen from the emitter film face. As an example, the natural resonant frequency of the emitter can be established at 46.8 kHz (this is a factor solely of the physical configuration of the emitter). The peak of 46.8 kHz shown in FIG. 11 is theoretically the frequency characteristic at which the emitter should operate. However, as soon as power is applied to the emitter film, it heats up slightly (as does any capacitive material), and causes the resonant operating frequency to shift downward (to the peak of 42.6 kHz shown in FIG. 11). With the present system, this shift happens about five-to-ten seconds after applying power to the emitter.

In one embodiment of the present invention, the screen spacing ("d" in FIGs. 6, 7, 8 and 9) is chosen so that standing waves are created at the location of the frequency to which the response curve moves after warming up (e.g., to 42.6 kHz in the example shown). The creation of standing waves at the operating resonant frequency of the system increases the magnitude of the output of the system as shown in FIG. 11. This purposeful spacing results in measured increase in output of as much as 5-6 dB.

The system described above can provide numerous advantages over conventional systems. Due to the increase in sound output and quality, and the ability to precisely process stereo inputs, two emitters can be used together to produce true binaural sound quality without requiring the use of headphones (as all conventional binaural systems do).

The power requirements for the present system are drastically reduced from those of prior art systems. The present signal processing system can be driven by a simple power supply and consumes as little as 22 watts per channel at peak usage. Conventional systems often consume 130 watts at peak usage, and can range from 80-130 watts during continual use. Despite this reduced power requirement, the present system has been measured to output several times the volume of conventional systems.

The distortion levels produced by the present system are considerably lower than conventional systems. Some such systems have been measured to produce 50%-80% distortion. The present system measures less than about 30% distortion, which is a significant improvement over conventional units.

While not so required, in one aspect of the invention, a capacitor (not shown) having a negative temperature coefficient can be coupled across the emittive film in parallel with the film. In this manner, as the temperature of the emitter increases during use, the coefficient of the capacitor decreases, thereby maintaining a relatively constant frequency response by the emitter.

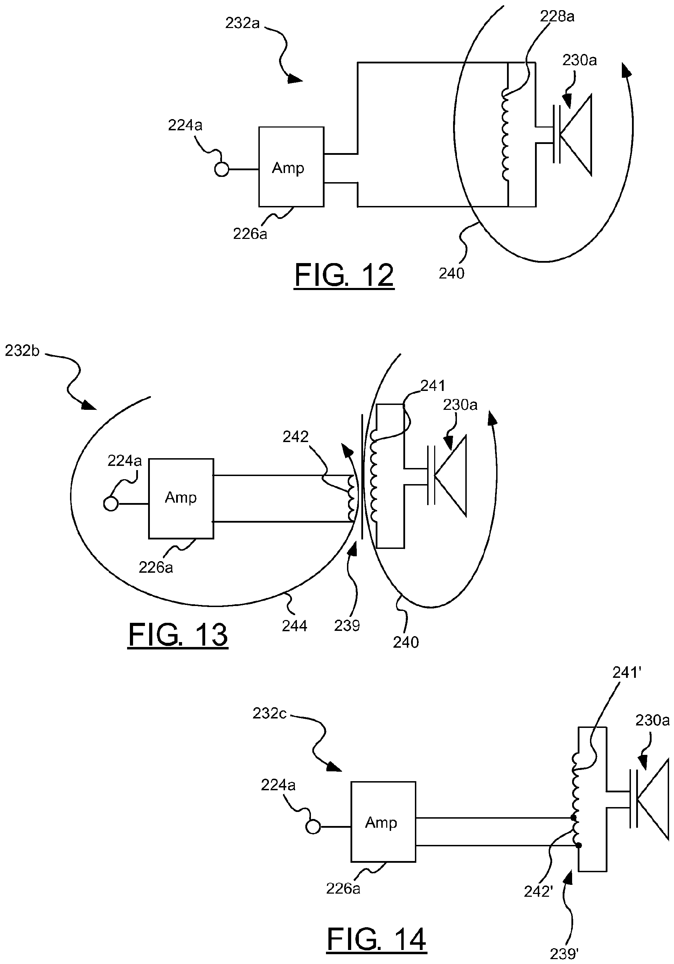

Turning now to FIG. 12, one exemplary amplifier/emitter configuration is shown in accordance with one aspect of the invention. Note, for ease of description, only one amplifier/emitter configuration is shown, coupled to output 24a from FIG. 1. Typically, the circuit from FIG. 1 would feed two such amplifier/emitter sets, fed from outputs 24a and 24b (in which case, due to the common oscillator 23, the same carrier signal could be applied to both sets of amplifiers/emitters).

Typically, the signal from the signal processing system 10 is electronically coupled to amplifier 226a. After amplification, the signal is delivered to emitter assembly 232a. In the embodiment shown, the emitter assembly includes an emitter 230a that can be operable at ultrasonic levels. An inductor 228a forms a parallel resonant circuit with the emitter 230a. By configuring the inductor in parallel with the emitter, the current circulates through the inductor and emitter (as represented schematically by loop 240) and a parallel resonant circuit can be achieved.

Many conventional systems utilize an inductor oriented in series with the emitter. The disadvantage to this arrangement is that such a resonant circuit must necessarily cause wasted current to flow through the inductor. As is known in the art, the emitter 230a will perform best at (or near) the point where electrical resonance is achieved in the circuit. However, the amplifier 226a introduces changes in the circuit, which can vary by temperature, signal variance, system performance, etc. Thus, it can be more difficult to obtain (and maintain) stable resonance in the circuit when the inductor 228a is oriented in series with the emitter (and the amplifier).

The embodiment of the invention illustrated in FIG. 12 allows resonance to be achieved in the inductor-emitter circuit without the direct presence of the amplifier in the circulating current path (e.g., loop 240), resulting in more stable and predictable performance of the emitter, and significantly less power being wasted as compared to conventional series resonant circuits. Obtaining resonance at optimal system performance can greatly improve the efficiency of the system (that is, reduce the power consumed by the system) and greatly reduce the heat produced by the system.

The inductor 228a can be of a variety of types known to those of ordinary skill in the art. However, inductors generate a magnetic field that can "leak" beyond the confines of the inductor. This field can interfere with the operation and/or response of the parametric emitter. Also, many inductor/emitter pairs used in parametric sound applications operate at voltages that generate a great deal of thermal energy. Heat can also negatively affect the performance of a parametric emitter.

For at least these reasons, in most conventional parametric sound systems the inductor is physically located a considerable distance from the emitter. While this solution addresses the issues outlined above, it adds another significant complication: the signal carried from the inductor to the emitter is generally a relatively high voltage (on the order of 160 V peak-to-peak or higher). As such, the wiring connecting the inductor to the emitter must be rated for high voltage applications. Also, long "runs" of the wiring may be necessary in certain installations, which can be both expensive and dangerous, and can also interfere with communication systems not related to the parametric emitter system.

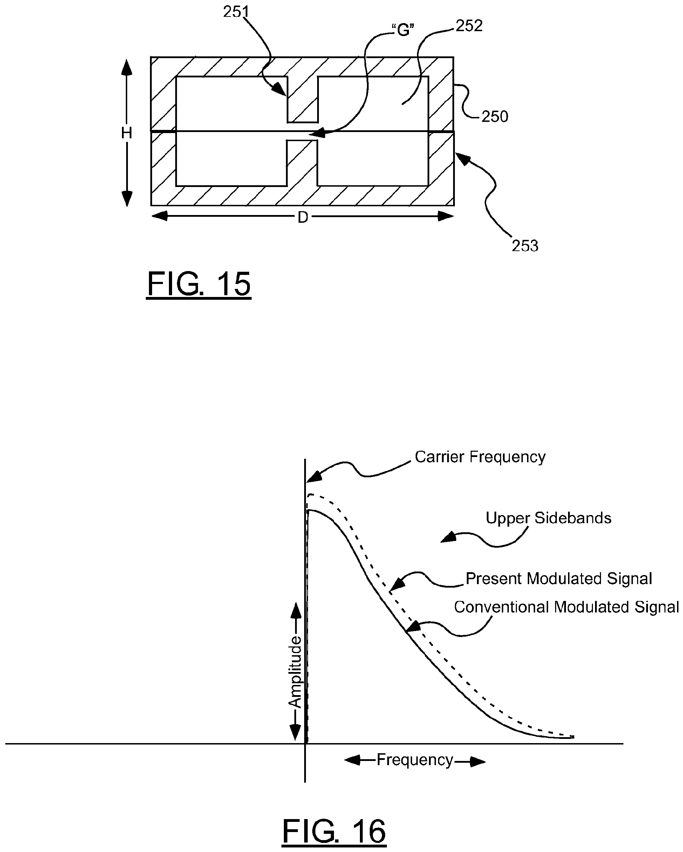

The present inventor has addressed this problem in a number of manners. In one aspect of the invention, the inductor 228a (and, as a component 241, 241' of a transformer 239, 239' shown in FIGs. 13 and 14) is a "pot core" inductor that is held within a pot core 250 (FIG. 15), typically formed of a ferrite material. The pot core serves to confine the inductor windings and the magnetic field generated by the inductor. The pot core illustrated at 250 in FIG. 15 is shown for exemplary purposes only. Such a pot core will typically include an outer wall 253 and an inner wall 251. The outer wall substantially completely encloses the windings of the transformer within the pot core, while the windings of the transformer circumscribe the inner wall.

Typically, the pot core 250 includes two ferrite halves that define a cavity 252 within which coils of the inductor can be disposed (the windings of the inductor are generally wound upon a bobbin or similar structure prior to being disposed within the cavity). An air gap "G" can serve to dramatically increase the permeability of the pot core without affecting the shielding capability of the core (the inductor(s) within the pot core are substantially completely shielded). Thus, by increasing the size of the air gap "G," the permeability of the pot core is increased. However, increasing the air gap also causes an increase in the number of turns required in the inductor(s) held within the pot core in order to achieve a desired amount of inductance.

Thus, a large air gap can dramatically increase permeability and at the same time reduce heat generated by an inductor held within the pot core, without compromising the shielding properties of the core. However, by increasing the size of the air gap, more windings are required on the inductor (228a, 241, 241') to achieve the inductance required to match the emitter 230a (e.g., to create a resonant circuit with the emitter). As discussed further below, the present inventor capitalizes on this seeming disadvantage to increasing the size of the air gap "G".

Another obstacle faced by many conventional approaches to parametric sound production lies in a problem related to the relationship between the amplifier and the emitter. Generally speaking, the higher a frequency that is processed by an amplifier, the higher impedance at which the amplifier is best suited to operate (in the present case, the impedance experienced by the amplifier is the result of the load introduced by the inductor/emitter pair, and by the overall amplifier/inductor/emitter circuit). In the case of parametric sound production, the operative signal is generally 40 kHz (or above). Amplifiers working with frequencies as high as this work best when experiencing relatively high load impedances (on the order of 8-12 Ohms). However, conventional parametric circuitry often present loads to the amplifier having impedances as low as 3 Ohms or less. Impedances this low are deemed too low even for conventional audio amplifiers to perform optimally.

To account for this, it would be desirable to increase the impedance of the inductor/emitter circuit to improve the performance of the amplifier. However, as the available designs for parametric emitters are limited, and as it is optimal to obtain resonance in the inductor/emitter pairing, merely increasing (or decreasing) the load applied by the inductor/emitter to the amplifier is not easily accomplished without adversely affecting performance of the unit as a whole.

When faced with these considerations, the present inventor was led to develop a novel manner of simultaneously addressing a multitude of problems. In the embodiment illustrated in FIG. 13, a step-up transformer 239 includes a pair of inductor elements 241 and 242. In this arrangement, inductor element 241 serves as the secondary winding, and inductor element 242 serves as the primary winding. In one embodiment, both the primary and secondary windings are contained within the pot core 250 illustrated in FIG. 15. The combination of these elements allows the design of a highly efficient emitter system that can be optimized to a number of performance characteristics.

As discussed above, it is desirable to achieve a parallel resonant circuit (loop 240 of FIG. 13) with the inductor element 241 and the emitter 230a. However, it is also desirable to increase the impedance load experienced by the amplifier 226a due to the load of the inductor/emitter pair (and the overall assembly 232a, 232b, 232c, etc.) to provide an impedance load at which the amplifier is more suited to operate. It is also desirable to achieve each of these objectives while locating the inductor physically near the emitter without radiation and heat generated by the inductor interfering with the emitter. The present system addresses each of these issues as follows:

By adjusting the air gap "G" of the pot core that contains inductor elements 241 and 242, the number of turns necessary in the inductor element 241 can be adjusted (a larger air gap "G" requires more turns on the inductor element 241 to maintain the same level of inductance as a smaller air gap "G"). Inductor element 241 is the secondary winding of the step-up transformer 239. By increasing the number of turns on inductor element 241, the number of turns on inductor element 242 must also be increased (to maintain the same ratio in the step-up transformer). Advantageously, by increasing the number of turns on inductor element 242, the impedance load "seen" or experienced by the amplifier 226a is increased. This increased impedance results in the amplifier 226a performing much better than at low impedances.

Thus, each of loop 240 and loop 244 (FIG. 13) can be "tuned" to operate at its most efficient level. Adjusting the air gap "G" in the pot core provides the ability to adjust the number of turns in inductor element 241 without changing the desired inductance of inductor element 241 (which would otherwise affect the resonance in loop 240). This, in turn, provides the ability to adjust the number of turns in inductor element 242 to best match the impedance load at which the amplifier performs best. Thus, the present inventor has found a manner of essentially de-coupling (from either or both a physical and a design standpoint) the various adjustments that are possible in the circuit to allow refinements that positively affect the circuit of loop 244 without negatively affecting the circuit of loop 240. This has been accomplished by recognizing that the air gap "G" can be adjusted to maintain the same level of inductance in inductor element 241 while allowing adjustment to the number of turns in inductor element 241.

Another advantage provided by the present system is that the physical size of the pot core 250 can be minimized a great deal by simply increasing the air gap size "G" as the overall physical size of the pot core 250 is decreased. In this manner, a very small pot core transformer can be utilized while still providing the desired inductance in element 241, 241' to create resonance with the emitter 230a, and the desired inductance in element 242, 242' to provide a suitable impedance load at which the amplifier 226a operates best. This can be accomplished while still preventing saturation of the transformer, which might otherwise occur should a smaller transformer be utilized.

The concept can be carried out in a number of manners. In the example shown in FIG. 13, two inductor elements 241, 242 are utilized, the windings of which are encompassed within the pot core 250. In the example illustrated in FIG. 14, the primary and secondary windings can be combined in what is commonly referred to as an autotransformer 239', the operation and function of which will be readily appreciated by one of ordinary skill in the art having possession of this disclosure. The autotransformer can be configured such that its windings can easily be contained within the pot core.

The use of a step-up transformer provides additional advantages to the present system. Because the transformer "steps-up" from the direction of the amplifier to the emitter, it necessarily "steps-down" from the direction of the emitter to the amplifier. Thus, any negative feedback that might otherwise travel from the inductor/emitter pair to the amplifier is reduced by the step-down process, thus minimizing the affect of any such event on the amplifier and the system in general (in particular, changes in the inductor/emitter pair that might affect the impedance load experienced by the amplifier are greatly minimized).

In one exemplary embodiment, 175/64 Litz wire is used for the primary and secondary windings. Inductor element 241 can include about 25 turns and inductor element 242 can include about 4.5 turns. Air gap "G" is established at about 2 mm (using a ferrite pot core with a diameter "D" of about 36 mm and a height "H" of about 22 mm). In this aspect, the amplifier experiences an impedance of about 8 Ohms (measured at an operating frequency of about 44 kHz).

The above-described system performs with markedly low heat production (e.g., markedly high efficiency). In one test scenario, the system was run continuously for seven days, twenty-fours a day, at maximum output, with 90% modulation. After (and during) this test, the measured temperature of the system barely, if at all, deviated from room temperature. Benefits provided by this improved performance can be seen graphically in FIG. 16.

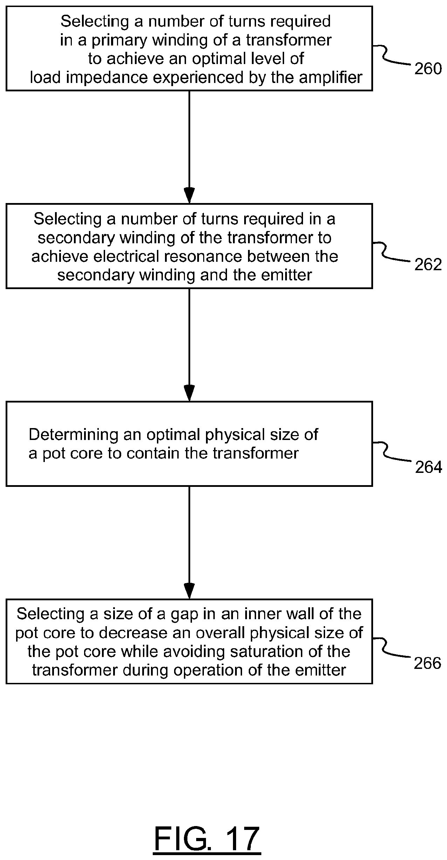

The flowchart of FIG. 17 illustrates one exemplary method of the present invention. In this process, a method of optimizing a parametric emitter system having a pot core transformer coupled between an amplifier and an emitter is provided. The method can include, at 260, selecting a number of turns required in a primary winding of the pot core transformer to achieve an optimal level of load impedance experienced by the amplifier. At 262, a number of turns required in a secondary winding of the transformer can be selected in order to achieve electrical resonance between the secondary winding and the emitter. At 264, an optimal physical size of a pot core to contain the transformer can be determined, with the pot core having an air gap formed in an inner wall thereof with windings of the transformer circumscribing the inner wall. At 266, a size of the air gap of the pot core containing the windings of the transformer can be selected to decrease an overall physical size of the pot core transformer while avoiding saturation of the transformer during operation of the emitter.

While the present invention has been described having varying components described in varying positions relative to the order in which an audio signal can be processed, in some embodiments of the invention, the order in which the audio signal is processed can significantly affect the performance of the systems. Thus, some (but not all), claimed embodiments are limited to the precise components recited, and can be limited to processing an audio signal in the precise step-wise order in which the components are claimed or shown. Similarly some (but not all) of the methods claimed or described herein are limited to the precise step-wise order in which the process steps are recited.

It is to be understood that the above-referenced arrangements are illustrative of the application for the principles of the present invention. It will be apparent to those of ordinary skill in the art that numerous modifications can be made without departing from the principles and concepts of the invention as set forth in the claims.

## Claims

1. A parametric signal emitting system, comprising:
a signal processing system (10) that is configured to generate an ultrasonic carrier signal having an audio signal modulated thereon;
an amplifier (226a), operable to amplify the carrier signal having the audio signal modulated thereon; and
an emitter (230a), capable of emitting into a fluid medium the carrier signal having the audio signal modulated thereon; **characterised in that** the system further comprises:
a pot core transformer (239), operatively coupled between the amplifier (226a) and the emitter (230a); wherein
a secondary winding (241) of the pot core transformer (239) and the emitter (230a) are arranged in a parallel resonant circuit (240); and
wherein a number of turns in the secondary winding (241) of the pot core transformer (239) is selected to produce electrical resonance with a capacitance of the emitter (230a); and a number of turns in a primary winding (242) of the pot core transformer (239) is selected to achieve an optimal level of load impedance experienced by the amplifier (226a).

2. The system of claim 1, wherein the pot core (250) includes an outer wall (253) that fully encloses windings of the transformer (239), and an inner wall (251) circumscribed by the windings of the transformer (239).

3. The system of claim 2, wherein the inner wall (251) includes an air gap (G) defined therein.

4. The system of any one of the preceding claims, wherein the transformer (239) is attached to an assembly carrying the emitter (230a).

## Patentansprüche

1. System zum Emittieren parametrischer Signale, umfassend:
ein Signalverarbeitungssystem (10), das dafür konfiguriert ist, ein Ultraschallträgersignal mit einem darauf modulierten Audiosignal zu erzeugen;
einen Verstärker (226a), der betreibbar ist, um das Trägersignal mit dem darauf modulierten Audiosignal zu verstärken; und
einen Emitter (230a), der fähig ist, das Trägersignal mit dem darauf modulierten Audiosignal in ein Fluidmedium zu emittieren; **dadurch gekennzeichnet, dass** das System ferner umfasst:
einen Schalenkernübertrager (239) in Wirkverbindung zwischen dem Verstärker (226a) und dem Emitter (230a); worin
eine sekundäre Wicklung (241) des Schalenkernübertragers (239) und der Emitter (230a) in einem Parallelschwingkreis (240) angeordnet sind; und
worin eine Reihe von Windungen in der sekundären Wicklung (241) des Schalenkernübertragers (239) ausgewählt ist, um elektrische Resonanz mit einer Kapazität des Emitters (230a) zu erzeugen; und eine Reihe von Windungen in einer primären Wicklung (242) des Schalenkernübertragers (239) ausgewählt ist, um ein optimales Niveau der von dem Verstärker (226a) erfahrenen Lastimpedanz zu erreichen.

2. System nach Anspruch 1, worin der Schalenkern (250) eine Außenwand (253), die Wicklungen des Übertragers (239) voll umschließt, und eine von den Wicklungen des Übertragers (239) umschriebene Innenwand (251) beinhaltet.

3. System nach Anspruch 2, worin die Innenwand (251) einen darin definierten Luftspalt (G) beinhaltet.

4. System nach einem der vorhergehenden Ansprüche, worin der Übertrager (239) an einer den Emitter (230a) tragenden Anordnung befestigt ist.

## Revendications

1. Système d'émission de signaux paramétriques, comprenant :
un système de traitement de signaux (10) qui est configuré pour générer un signal porteur ultrasonique ayant un signal audio modulé sur ce dernier ;
un amplificateur (226a), pouvant fonctionner pour amplifier le signal porteur ayant le signal audio modulé sur ce dernier ; et
un émetteur (230a), capable d'émettre dans un milieu fluide le signal porteur ayant le signal audio modulé sur ce dernier ; **caractérisé en ce que** le système comprend en outre :
un transformateur à noyau en pot (239), couplé de manière fonctionnelle entre l'amplificateur (226a) et l'émetteur (230a) ; dans lequel
un enroulement secondaire (241) du transformateur à noyau en pot (239) et l'émetteur (230a) sont agencés dans un circuit résonnant parallèle (240) ; et
dans lequel un certain nombre de spires dans l'enroulement secondaire (241) du transformateur à noyau en pot (239) sont sélectionnées pour produire une résonnance électrique ayant une capacité de l'émetteur (230a) ; et un certain nombre de spires dans un enroulement primaire (242) du transformateur à noyau en pot (239) sont sélectionnées pour atteindre un niveau optimal d'impédance de charge subie par l'amplificateur (226a).

2. Système selon la revendication 1, dans lequel le noyau en pot (250) inclut une paroi extérieure (253) qui enferme complètement des enroulements du transformateur (239), et une paroi intérieure (251) circonscrite par les enroulements du transformateur (239).

3. Système selon la revendication 2, dans lequel la paroi intérieure (251) inclut un entrefer (G) défini dans celle-ci.

4. Système selon l'une quelconque des revendications précédentes, dans lequel le transformateur (239) est assujetti à un ensemble portant l'émetteur (230a).
